(19) Europäisches Patentamt
European Patent Office
Office européen des brevets

(11) **EP 2 365 283 A2**

(12) **EUROPÄISCHE PATENTANMELDUNG**

(43) Veröffentlichungstag:
**14.09.2011 Patentblatt 2011/37**

(51) Int Cl.:
***G01C 21/20*** *(2006.01)*

(21) Anmeldenummer: **11001736.5**

(22) Anmeldetag: **02.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.03.2010 DE 102010010951**

(71) Anmelder: **Astrium GmbH**
**82024 Taufkirchen (DE)**

(72) Erfinder:
• **Daubrawa, Julian**
**81673 München (DE)**

• **Erker, Stefan**
**82234 Wessling (DE)**
• **Felux, Michael**
**82234 Wessling (DE)**
• **Meliton, Gunther**
**28760 Tres Cantos (Madrid) (ES)**
• **Van Kleef, Arnaud**
**8316 PR Marknesse (NL)**

(74) Vertreter: **Avenhaus, Beate**
**EADS Deutschland GmbH**
**Patentabteilung**
**81663 München (DE)**

(54) **Informationswiedergabegerät**

(57) Die Erfindung beschreibt ein Informationswiedergabegerät (1). Dieses umfasst eine Anzeigeeinheit (2) zur Darstellung von Informationen sowie eine Verarbeitungseinheit (7), welche mit der Anzeigeeinheit (2) gekoppelt ist und dieser die darzustellenden Informationen bereitstellt. Das Informationswiedergabegerät (1) weist eine Positionsbestimmungseinrichtung (3) auf, welche dazu ausgebildet ist, die Position der Vorrichtung (1) sowie eine Ausrichtung der Vorrichtung zu bestimmen und der Verarbeitungseinheit (7) ein die Position repräsentierendes erstes Signal (s_P) und ein die Ausrichtung repräsentierendes zweites Signal (s_A) zur weiteren Verarbeitung zuzuführen. Die Verarbeitungseinheit (7) ist dazu ausgebildet, Informationen zu Objekten aus einer Datenbank (8, 9) abzurufen und zu verarbeiten, wobei die Datenbank (8, 9) eine Vielzahl an Informationen zu Objekten von Orten innerhalb einer vorgegebenen räumlichen Umgebung umfasst. Die Verarbeitungseinheit ist weiter dazu ausgebildet, für die gegenwärtige Ausrichtung der Vorrichtung (1) Informationen zu Objekten in Richtung der Ausrichtung der Vorrichtung (1) zu ermitteln und auf der Anzeigeeinheit (2) zur Darstellung zu bringen.

Fig. 4

EP 2 365 283 A2

**Beschreibung**

Die Erfindung betrifft ein Informationswiedergabegerät mit einer Anzeigeeinheit zur Darstellung von Informationen, einer Verarbeitungseinheit und einer Positionsbestimmungseinrichtung.

Informationswiedergabegeräte, wie z.B. Computer, Laptops, PDAs (Personal Digital Assistant), Smart Phones und dergleichen, ermöglichen es einem Nutzer, aus Datenbanken, wie z.B. lokalen Speichern oder Informationsquellen im Internet, Informationen zu Objekten von Orten abzurufen. Verfügt das Informationswiedergabegerät über eine Positionsbestimmungseinrichtung, wie z.B. einen GPS-Empfänger, so können Informationen zu Objekten in der Umgebung des Informationswiedergabegeräts auch automatisch unter Nutzung der gegenwärtigen Position des Informationswiedergabegeräts angezeigt werden. Informationen zu Objekten von Orten werden auch als Points-of-Interest (POI) bezeichnet.

Dienste zur Anzeige von POIs werden beispielsweise bei Navigationssystemen in Kraftfahrzeugen oder auch vom Kartendienst von Google bereitgestellt. Für die Benutzer der Dienste ergibt sich der Vorteil, dass diese ohne zeitraubende Suche Informationen zu Objekten von Orten in der Umgebung erhalten. Ein Nachteil dieser Systeme besteht darin, dass diese statisch sind, d.h. der Nutzer muss die in dem Informationswiedergabegerät angezeigten Informationen in Verbindung zur realen Umgebung bringen.

Es ist Aufgabe der vorliegenden Erfindung, ein Informationswiedergabegerät anzugeben, welches eine verbesserte Funktionalität zur Wiedergabe von ortsbezogenen Informationen aufweist. Eine weitere Aufgabe der Erfindung besteht darin, ein verbessertes Verfahren zum Betrieb eines Informationswiedergabegeräts anzugeben.

Diese Aufgaben werden gelöst durch ein Informationswiedergabegerät gemäß den Merkmalen des Patentanspruches 1 sowie ein Verfahren gemäß den Merkmalen des Patentanspruches 13. Vorteilhafte Ausgestaltungen ergeben sich jeweils aus den abhängigen Patentansprüchen.

Die Erfindung schafft ein Informationswiedergabegerät, welches eine Anzeigeeinheit zur Darstellung von Informationen, eine Verarbeitungseinheit sowie eine Positionsbestimmungseinrichtung umfasst. Die Verarbeitungseinheit ist mit der Anzeigeeinheit gekoppelt und stellt der Anzeigeeinheit die darzustellenden Informationen bereit. Die Positionsbestimmungseinrichtung ist dazu ausgebildet, die Position der Vorrichtung sowie eine Ausrichtung der Vorrichtung zu bestimmen und der Verarbeitungseinheit ein die Position repräsentierendes erstes Signal und ein die Ausrichtung repräsentierendes zweites Signal zur weiteren Verarbeitung zuzuführen. Die Verarbeitungseinheit ist dazu ausgebildet, Informationen zu Objekten aus einer Datenbank abzurufen und zu verarbeiten, wobei die Datenbank eine Vielzahl von Informationen zu Objekten von Orten innerhalb einer vorgegebenen räumlichen Umgebung umfasst. Die Verarbeitungseinheit ist ferner dazu ausgebildet, für die gegenwärtige Ausrichtung der Vorrichtung Informationen zu Objekten in Richtung der Ausrichtung der Vorrichtung zu ermitteln und auf der Anzeigeeinheit zur Darstellung zu bringen.

Unter einer Ausrichtung des Informationswiedergabegeräts wird beispielsweise eine tatsächliche oder gewünschte Blickrichtung eines Nutzers des Informationswiedergabegeräts verstanden. Dadurch, dass einem Nutzer auf dem Informationswiedergabegerät lediglich diejenigen für die Ausrichtung, d.h. seine Blickrichtung, relevanten Informationen zu Objekten in Richtung der Ausrichtung der Vorrichtung angezeigt werden, entfällt für den Benutzer die Notwendigkeit, eine Zuordnung von auf der Anzeigeeinheit ausgegebenen Informationen zu der realen Umgebung vornehmen zu müssen. Hierdurch ergibt sich eine verbesserte Benutzungsfreundlichkeit.

Zur Bestimmung der Position sowie Ausrichtung der Vorrichtung umfasst die Positionsbestimmungseinrichtung gemäß einer Ausführungsvariante zumindest zwei Antennen eines globalen Satellitennavigationssystems, welche mit einem Empfänger des globalen Satellitennavigationssystems (einem sog. GNSS-Empfänger) zur Bestimmung der Position und Ausrichtung der Vorrichtung gekoppelt sind. Für die Ermittlung von Informationen zu Objekten in Richtung der Ausrichtung der Vorrichtung und Darstellung auf der Anzeigeeinheit ist es ausreichend, wenn die Ausrichtung der Vorrichtung lediglich in der Horizontalen ermittelt wird. Dies wird als "Heading" bezeichnet. In dieser Ausführungsvariante ist es ausreichend, wenn das Informationswiedergabegerät zwei Antennen des globalen Satellitennavigationssystems umfasst. Soll eine vollständige Lage der Vorrichtung im Raum ermittelt werden, so muss die Positionsbestimmungseinrichtung drei Antennen aufweisen.

Die Bestimmung der Ausrichtung der Vorrichtung, d.h. der gewünschten Blickrichtung eines Nutzers des Informationswiedergabegeräts, kann beispielsweise durch eine zeitgleiche Trägerphasenmessung der zwei bzw. drei relativ zu zumindest zwei Satelliten des globalen Satellitennavigationssystems angeordneten Antennen erfolgen. Eine umso höhere Genauigkeit lässt sich dadurch erzielen, dass die zeitgleiche Trägerphasenmessung für die zwei bzw. drei Antennen relativ zu einer möglichst großen Anzahl an Satelliten ermittelt wird.

Die zumindest zwei Antennen sind in einem bekannten Abstand zueinander auf oder in dem Informationswiedergabegerät angeordnet. Genauer muss der Abstand der Phasenzentren der Antennen bekannt sein. Es hat sich als ausreichend herausgestellt, wenn der Abstand zwischen jeweils zwei Antennen in etwa 10 cm beträgt. Hiermit ist eine ausreichende Genauigkeit bei der Ermittlung der Ausrichtung zu erzielen.

Die Positionsbestimmungseinrichtung könnte alternativ dazu ausgebildet sein, die Bestimmung der Position auch unter Nutzung anderer drahtloser Kommunikationstechnologien vorzunehmen. So kann es gegebenenfalls vorgesehen sein, dies unter Zuhilfenahme von drahtlosen Kommunikationsnetzwerken zu realisieren. Die Ausrichtung könnte mit einer Kompassfunktion/-einheit bestimmt werden.

Gemäß einer weiteren zweckmäßigen Ausgestaltung umfasst die Positionsbestimmungseinrichtung zur Positions- und Ausrichtungsbestimmung des Informationswiedergabegeräts zumindest einen weiteren Sensor. Der weitere Sensor kann beispielsweise ein Gyroskop sein, welcher die Genauigkeit bei der Bestimmung der Ausrichtung erhöht.

In einer weiteren Ausgestaltung der Erfindung ist die Datenbank in einem lokalen Speicher des Informationswiedergabegeräts angeordnet. Der lokale Speicher kann fest in dem Informationswiedergabegerät integriert sein. Ebenso kann der lokale Speicher in Gestalt einer in das Informationswiedergabegerät einsetzbaren Speicherkarte, z.B. einer SD-Speicherkarte, realisiert sein. Je nach Umfang der Datenbank kann diese auch auf mehreren solcher Speicherkarten verteilt angeordnet sein, so dass der Benutzer die für die jeweilige Umgebung notwendige Speicherkarte zunächst mit dem Informationswiedergabegerät verbinden muss, um der Verarbeitungseinheit den Zugriff auf die darauf befindlichen Daten zu ermöglichen.

Alternativ oder zusätzlich kann die Datenbank in einem weiteren, über eine insbesondere drahtlose Kommunikationsverbindung zugreifbaren Speicher angeordnet sein. Der weitere Speicher kann beispielsweise eine von einem Dienstleister bereitgestellte Datenbank darstellen. Ebenso kann die Datenbank durch im Internet verfügbare Informationen gebildet sein. Die Kommunikationsverbindung zwischen dem Informationswiedergabegerät und dem weiteren Speicher kann beispielsweise über WLAN (Wireless Local Area Network), eine GSM (Global System for Mobile Communication)- oder eine UMTS (Universal Mobile Telecommunication System)-Verbindung realisiert sein. Darüber hinaus können auch andere Kommunikationstechniken zum Einsatz kommen, welche die Übertragung der durch die Verarbeitungseinheit benötigten Daten zur Bereitstellung von Informationen zu Objekten erlauben.

In einer weiteren vorteilhaften Ausgestaltung umfasst das Informationswiedergabegerät eine Bilderfassungseinheit, welche der Verarbeitungseinheit Videodaten der Umgebung zur Verarbeitung und Darstellung auf der Anzeigeeinheit oder einer weiteren Anzeigeeinheit bereitstellt. Es versteht sich, dass die Bilderfassungseinheit Videodaten der Umgebung in Richtung der Ausrichtung der Vorrichtung aufnimmt. Insbesondere umfasst die Bilderfassungseinheit zwei Aufnahmeeinheiten für die Erzeugung eines Stereobilds, so dass die aufgezeichneten Daten dreidimensional dargestellt werden können. Um dem Benutzer die Nutzung der Informationen zu Objekten in Richtung der Ausrichtung der Vorrichtung so einfach wie möglich zu machen, ist weiterhin vorgesehen, dass die Informationen zu den Objekten den Videodaten auf der Anzeigeeinheit überlagert sind. Auf diese Weise ist durch den Nutzer keine eigenständige Zuordnung der Informationen zu den Objekten zu der in den Videodaten wiedergegebenen Umgebung vorzunehmen.

Zweckmäßigerweise sind die Informationen zu den Objekten grafischer und/oder alphanumerischer Natur und sind optional in der Anzeigeeinheit einblendbar und/oder ausblendbar.

Das Informationswiedergabegerät kann wahlweise tragbar oder in einem Fortbewegungsmittel angeordnet sein.

In einer konkreten Ausgestaltung kann das Informationswiedergabegerät ein Fernglas oder eine Kamera oder ein PDA (Personal Digital Assistant) oder ein Telefon oder ein Rechner (z.B. ein tragbarer Rechner, wie ein Laptop oder Netbook oder Tablet-PC) oder ein Assistenzsystem in einem Fahrzeug oder Flugzeug sein.

Die Erfindung schafft weiterhin ein Verfahren zum Betrieb eines Informationswiedergabegeräts, das eine Anzeigeeinheit zur Darstellung von Informationen, eine mit der Anzeigeeinheit gekoppelte Verarbeitungseinheit und eine Positionsbestimmungseinrichtung umfasst. Bei dem erfindungsgemäßen Verfahren werden durch die Positionsbestimmungseinrichtung die Position der Vorrichtung sowie eine Ausrichtung der Vorrichtung bestimmt. Der Verarbeitungseinheit werden ein die Position repräsentierendes erstes Signal und ein die Ausrichtung repräsentierendes zweites Signal zur weiteren Verarbeitung zugeführt. Ferner werden durch die Verarbeitungseinheit Informationen zu Objekten aus einer Datenbank abgerufen und verarbeitet, wobei die Datenbank eine Vielzahl an Informationen zu Objekten von Orten innerhalb einer vorgegebenen räumlichen Umgebung umfasst. Durch die Verarbeitungseinheit werden für die gegenwärtige Ausrichtung der Vorrichtung Informationen zu Objekten in Richtung der Ausrichtung der Vorrichtung ermittelt und an die Anzeigeeinheit zur Darstellung übertragen.

Das erfindungsgemäße Verfahren weist die gleichen Vorteile auf, wie diese in Verbindung mit dem erfindungsgemäßen Informationswiedergabegerät beschrieben wurden.

In einer zweckmäßigen Ausgestaltung erfolgt die Bestimmung der Ausrichtung der Vorrichtung durch eine zeitgleiche Trägerphasenmessung von mindestens zwei relativ zu einem Satelliten angeordneten Antennen der Positionsbestimmungseinrichtung.

Die Erfindung wird nachfolgend näher anhand eines Ausführungsbeispiels in der Zeichnung erläutert. Es zeigen:

Fig. 1    eine schematische Darstellung eines erfindungsgemäßen Informationswiedergabegeräts,

Fig. 2    das einem erfindungsgemäßen Informationswiedergabegerät zu Grunde liegende Prinzip zur Positions- und Ausrichtungsbestimmung gemäß einer Ausführungsvariante,

Fig. 3    eine beispielhafte Darstellung einer durch ein Informationswiedergabegerät an seiner Position in einer ausgewählten Ausrichtung aufgenommene Ansicht, und

Fig. 4    die in Fig. 3 dargestellte Ansicht der Umgebung des Informationswiedergabegeräts, welches mit Informationen zu Objekten in Richtung der Ausrichtung der Vorrichtung versehen ist.

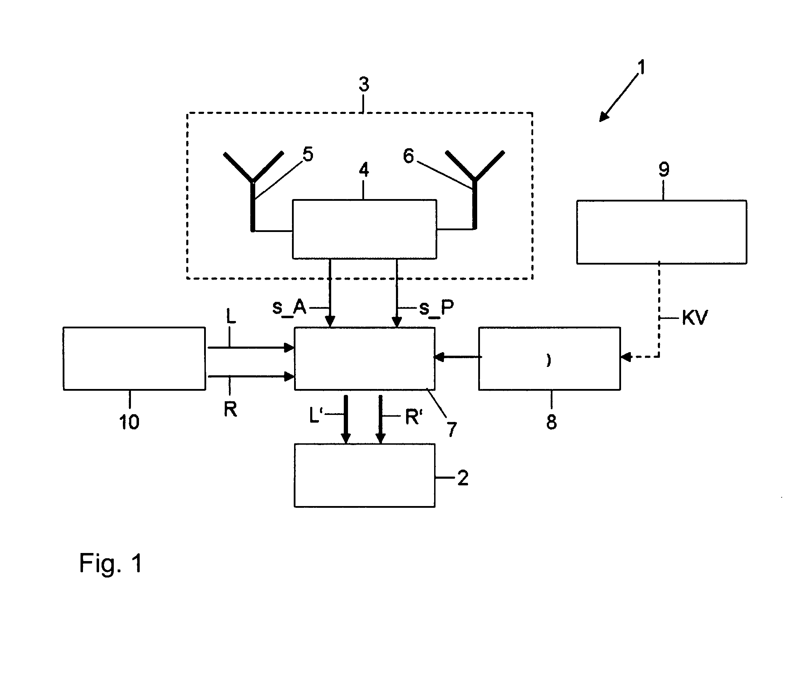

Fig. 1 zeigt in einer schematischen Darstellung den prinzipiellen Aufbau eines erfindungsgemäßen Informationswiedergabegeräts 1. Bei dem Informationswiedergabegerät 1 kann es sich beispielsweise um ein Fernglas, eine Kamera, einen tragbaren Rechner, ein Telefon oder einen PDA (Personal Digital Assistant) handeln.

Das Informationswiedergabegerät verfügt über eine Anzeigeeinheit 2 zur Darstellung von Informationen. Diese ist bevorzugt zur Darstellung der Informationen in hochauflösender Form ausgebildet. Insbesondere kann die Anzeigeeinheit durch ein Display ausgebildet sein.

Mit der Anzeigeeinheit 2 ist eine Verarbeitungseinheit 7 (sog. Core Processing Unit) verbunden, welche der Anzeigeeinheit die darzustellenden Informationen bereitstellt. Die von der Verarbeitungseinheit 7 an die Anzeigeeinheit 2 übertragenen und durch Letztere anzuzeigenden Informationen sind mit L' und R' gekennzeichnet. Die Verarbeitungseinheit 7 ist ihrerseits mit einer Positionsbestimmungseinrichtung 3 gekoppelt.

Die Positionsbestimmungseinrichtung 3 umfasst im vorliegenden Ausführungsbeispiel zwei, in einem bekannten Abstand angeordnete Antennen 5, 6 eines globalen Satellitennavigationssystems. Die Antennen 5, 6 sind mit einem Empfänger 4 des globalen Satellitennavigationssystems verbunden. Der auch als GNSS-Empfänger bezeichnete Empfänger 4 ist zur Bestimmung der Position und Ausrichtung der Vorrichtung 1 ausgebildet. Der Empfänger 4 der Positionsbestimmungseinrichtung 3 führt der Verarbeitungseinheit 7 ein die Position repräsentierendes erstes Signal s_P und ein die Ausrichtung der Vorrichtung repräsentierendes zweites Signal s_A zur weiteren Verarbeitung zu.

Unter der Ausrichtung des Informationswiedergabegeräts wird eine tatsächliche Richtung der Vorrichtung bezeichnet, welche in der Regel mit einer gewünschten Blickrichtung eines Nutzers des Informationswiedergabegeräts 1 übereinstimmt. Um einem Nutzer des Informationswiedergabegeräts die Ausrichtung zu erleichtern bzw. zu ermöglichen, kann z.B. vorgesehen sein, dass eine für die Ausrichtung zu verwendende Achse auf dem Gerät gekennzeichnet ist.

Mit den zwei Antennen 5, 6 der Positionsbestimmungseinrichtung 3 dargestellten Antennen ist die Ermittlung einer Ausrichtung des Informationswiedergabegeräts 1 in der Horizontalen möglich. Dies wird als "Heading" bezeichnet. Soll eine vollständige Lage, d.h. Ausrichtung der Vorrichtung, im Raum ermittelt werden, so müsste die Positionsbestimmungseinrichtung 3 entgegen der zeichnerischen Darstellung mit drei Antennen eines globalen Satellitennavigationssystems ausgestattet sein, die in definiertem Abstand zueinander angeordnet sind.

Umfasst das Informationswiedergabegerät - wie im Ausführungsbeispiel der Fig. 1 dargestellt - eine lediglich optionale Bilderfassungseinheit 10 (z.B. eine Videokamera), welche der Verarbeitungseinheit 7 Videodaten L, R der Umgebung zur Verarbeitung und Darstellung auf der Anzeigeeinheit 2 bereitstellt, so entspricht die Ausrichtung der optischen Achse der Bilderfassungseinheit 10. Im Ausführungsbeispiel ist die Bilderfassungseinheit 10 als Stereokamera ausgebildet, welche Videodaten für einen linken Kanal L und einen rechten Kanal R erfasst und der Verarbeitungseinheit 7 zur Darstellung eines dreidimensionalen Bilds zuführt. Lediglich beispielhaft ist das Informationswiedergabegerät 1 im Ausführungsbeispiel mit einem internen Datenspeicher 8 ausgestattet, welcher eine Datenbank mit einer Vielzahl an Informationen zu Objekten von Orten innerhalb einer vorgegebenen räumlichen Umgebung umfasst. Der Datenspeicher 8 kann ein fest in dem Informationswiedergabegerät 1 vorgesehener Speicher sein. Ebenso kann dieser in Gestalt einer in das Informationswiedergabegerät 1 einführbaren Speicherkarte, z.B. einer SD-Speicherkarte, ausgebildet sein.

Alternativ oder zusätzlich können die Informationen zu Objekten aus einer externen Datenbank 9 abgerufen werden. Ein Zugriff auf die externe Datenbank 9 ist beispielsweise über eine drahtlose Kommunikationsverbindung möglich. Die Art der verwendeten Kommunikationsverbindung ist hierbei beliebig. Insbesondere kommen WLAN, GSM- oder UMTS-Kommunikationsverbindungen in Betracht.

Die Verarbeitungseinheit 7 ist dazu ausgebildet, für die gegenwärtige Ausrichtung der Vorrichtung Informationen zu Objekten in Richtung der Ausrichtung der Vorrichtung zu ermitteln und auf der Anzeigeeinheit zur Darstellung zu bringen. Insbesondere werden die Informationen zu Objekten in Richtung der Ausrichtung der Vorrichtung den durch die Bilderfassungseinheit aufgenommenen Videodaten überlagert.

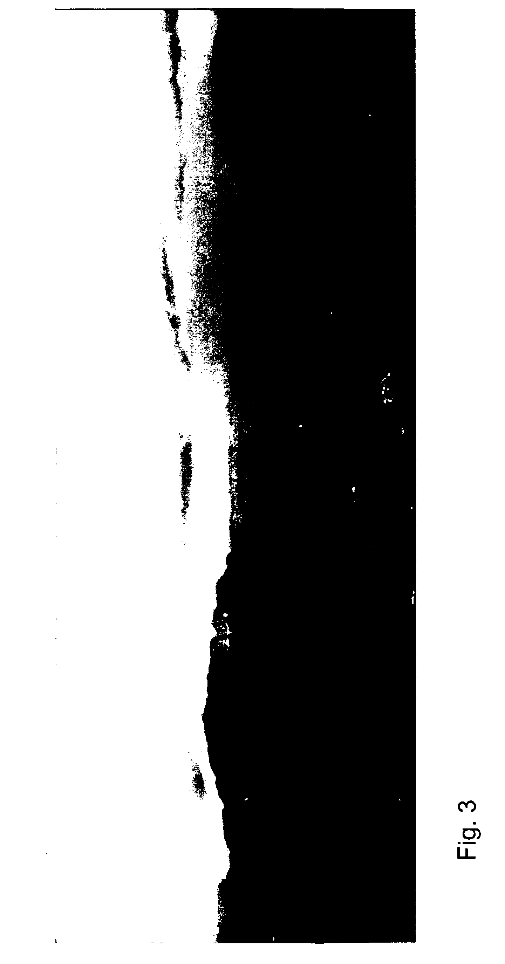

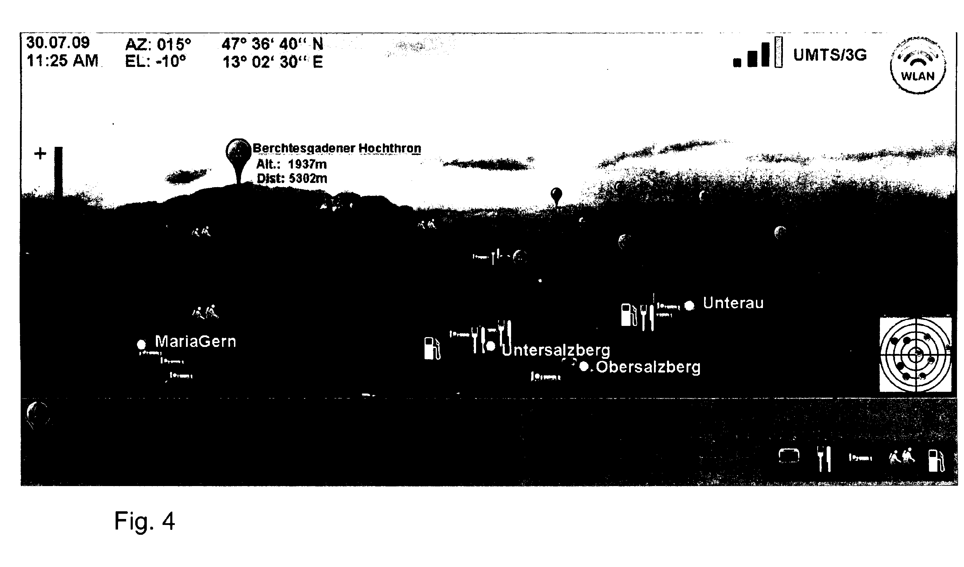

Dies ist beispielhaft in den Figuren 3 und 4 dargestellt. Fig. 3 zeigt ein durch die Bilderfassungseinheit 10 des Informationswiedergabegeräts 1 aufgenommenes Bild. Dieses Bild könnte beispielsweise auf der Anzeigeeinheit 2 des als Fernglases ausgebildeten Informationswiedergabegeräts 1 ausgegeben werden. Anhand der Position und der Ausrichtung des Informationswiedergabegeräts kann die Verarbeitungseinheit 7 bestimmen, welche Information in den Videodaten enthalten ist und annotiert werden kann.

Die Verarbeitungseinheit 7 ruft aus einem oder beiden der Datenspeicher 8, 9 für die gegenwärtige Position und Ausrichtung der Vorrichtung Informationen zu Objekten in Richtung der Ausrichtung der Vorrichtung ab. Diese werden dann direkt in das von der Bilderfassungseinheit 10 aufgenommene Bild integriert und auf der Anzeigeeinheit 2 zur Darstellung gebracht. Dies ist exemplarisch in Fig. 4 dargestellt.

Oberhalb der Bildaufnahme sind die geografischen Daten der Position und Ausrichtung des Informationswiedergabegeräts 1 dargestellt. Mit AZ ist ein Azimut-Winkel dargestellt, der im Ausführungsbeispiel 015° beträgt. Mit EL ist ein Elevations-Winkel gekennzeichnet, der im Ausführungsbeispiel -10° beträgt. Darüber hinaus ist die geografische Position des Informationswiedergabegeräts 1 visualisiert: 47° 36' 40" N und 13° 02' 30" E. Darüber hinaus wird dem Nutzer Empfang zu einem UMTS/3G-Kommunikationsnetzwerk signalisiert. In gleicher Weise ist eine vorhandene Verbindung zu einem WLAN-Kommunikationsnetzwerk dargestellt.

In der Bildaufnahme ist beispielsweise zu erkennen, dass der in der linken Bildhälfte bei A dargestellte Berg der "Berchtesgadener Hochthron" ist. Zusätzlich werden dessen Höhe ("Alt.:1937 m") und die Distanz von der gegenwärtigen Position des Informationswiedergabegeräts ("Dist: 5302 m") dargestellt. Weiterhin sind die Ortschaften "Maria Gern", "Untersaizberg", "Obersaizberg" und "Unterau" in der Bildaufnahme gekennzeichnet. An den mit B, C, D, E, F, G, H dargestellten Orten befinden sich weitere Informationen zu Objekten. In der rechten unteren Bildhälfte der Fig. 4 sind Symbole für sog. "Points of Interest" dargestellt, welche dem Betrachter der Anzeigeeinheit des Informationswiedergabegeräts 1 Informationen über einen Bahnhof, Restaurants, Gaststätten und/oder Hotels, Wanderwege und Tankmöglichkeiten bieten. In der linken Bildhälfte ist ferner ein Zoom-Faktor dargestellt, der durch den Benutzer variiert werden kann ("Zoom: 10x").

Wenn in der vorliegenden Beschreibung von einer Ermittlung von Informationen von Objekten in Richtung der Ausrichtung der Vorrichtung für die gegenwärtige Ausrichtung der Vorrichtung durch die Verarbeitungseinheit die Rede ist, so ist es derart zu verstehen, dass die Verarbeitungseinheit 7 selbst anhand der ihr durch die Positionsbestimmungseinrichtung 3 zugeführten Information über die Position und Ausrichtung die relevanten Informationen ermittelt, d.h. aktiv und gezielt aus der oder den Datenbanken des Datenspeichers 8 und/oder 9 abruft. Ebenso kann die Verarbeitungseinheit 7 die Information über die Position und Ausrichtung an die Datenbank senden, welche diese zur Suche nach den relevanten Informationen verwendet und die Ergebnisse dann an die Verarbeitungseinheit 7 zurückliefert.

Die Informationen zu Objekten von Orten innerhalb einer vorgegebenen räumlichen Umgebung können prinzipiell alphanumerischer und/oder grafischer Natur sein. Beispielsweise können die Daten die Silhouette von Bergen und/oder Objekten umfassen, wenn diese im Nebel gelegen sind. Daten können Informationen über Orte, die im Blickfeld, d.h. der Ausrichtung des Informationswiedergabegeräts liegen, umfassen. Die Art der Informationen kann prinzipiell beliebiger Natur sein.

Die Bestimmung der Ausrichtung des Informationswiedergabegeräts erfolgt durch die Positionsbestimmungseinrichtung 3. Durch diese wird eine zeitgleiche Trägerphasenmessung der zwei oder mehr Antennen der Positionsbestimmungseinrichtung 3 vorgenommen. Zwei Antennen sind notwendig, um lediglich die horizontale Ausrichtung (heading) des Informationswiedergabegeräts 1 zu ermitteln. Drei Antennen werden benötigt, um eine vollständige Lage des Informationswiedergabegeräts 1 im Raum zu ermitteln.

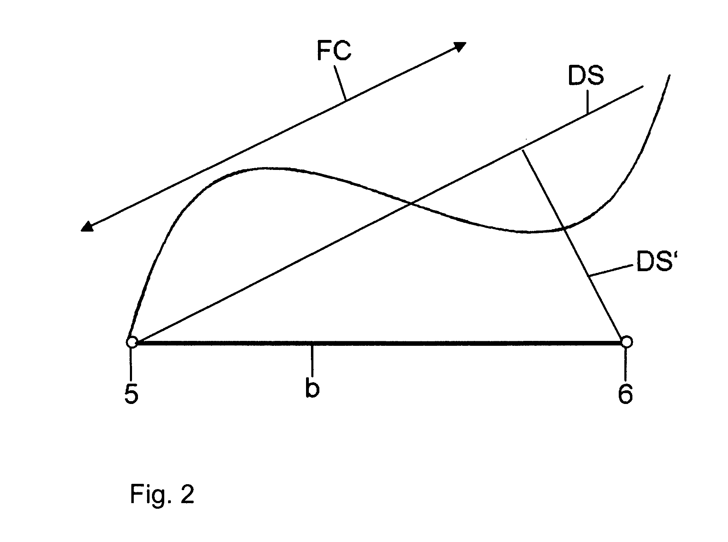

Die nachfolgende Beschreibung bezieht sich auf die Verwendung von lediglich zwei Antennen, wie dies im Ausführungsbeispiel der Fig. 1 dargestellt ist. Zunächst wird eine Trägerphasendifferenz der beiden Antennen 5, 6 zu einem Satelliten (nicht dargestellt) ermittelt. Diese Trägerphasendifferenz wird als "Single Difference" oder "Fraction of a Cycle" bezeichnet und ist in Fig. 2 mit FC gekennzeichnet. In dieser Figur kennzeichnet DS die Achse der Ausrichtung des Informationswiedergabegeräts 1 zu einem Satelliten des globalen Satellitennavigationssystems. b repräsentiert den Abstand zwischen den Antennen 5, 6, welcher bevorzugt möglichst groß, aber nicht kleiner als 10 cm ist. DS' ist der minimale Abstand der Antenne 6 zur Achse DS, d.h. DS' ist senkrecht zu DS angeordnet.

Die Trägerphasendifferenz wird durch nachfolgende Gleichung ermittelt:

$$\Delta\phi_1 - \Delta\phi_2 = \vec{b} \cdot \vec{e} + N\lambda \,,$$

wobei $\phi_1$ und $\phi_2$ die gemessenen Trägerphasen der Antennen 5, 6 sind. $\vec{b}$ repräsentiert den sog. Baseline-Vektor von Antenne 5 zu Antenne 6, e repräsentiert einen Einheitsvektor, der von den Antennen 5, 6 zum Satelliten zeigt. Der Unterschied zwischen den Einheitsvektoren von Antenne 5 und Antenne 6 ist dabei derart gering, dass dieser vernachlässigbar ist. N repräsentiert einen ganze Zahl, welche die Anzahl der ganzen Wellen der Wellenlänge $\lambda$ beschreibt.

Um Satelliten- und Receiveruhrenfehler auszuschließen, werden Doppeldifferenzen DD zwischen zwei Antennen und zwei Satelliten gebildet:

$$DD = \Delta\phi_1 - \Delta\phi_2 = \vec{b}(\vec{e}_1 - \vec{e}_2) + (N_1 - N_2)\lambda \,.$$

Anschließend wird N z.B. unter Zuhilfenahme der bekannten LAMBDA-Methode ermittelt. Mit Hilfe der Doppeldifferenz wird der Baseline-Vektor b ermittelt. Dies ist mit einer Doppeldifferenz möglich, sofern davon ausgegangen wird, dass bereits vorab Informationen über die Lage des Vektors (z.B. horizontal) und seiner Länge vorhanden sind. Ist dies nicht der Fall, so werden zwei bzw. drei Doppeldifferenzen benötigt. Das beschriebene Verfahren ist an sich bekannt und lässt sich mit drei Antennen auf einen beliebigen dreidimensionalen Fall erweitern.

Das beschriebene Verfahren ist lediglich ein Ausführungsbeispiel zur Ermittlung der Ausrichtung des Informationswiedergabegeräts. Prinzipiell ist es möglich, die Lagebestimmung auf vielfältigste Weise durchzuführen. Gleich ist allen Verfahren jedoch die relative Positionierung durch Trägerphasenmessungen und Verwendung vorab bekannter Informationen, wie z.B. den Abstand der Antennen 5, 6..

Um eine verbesserte Lagebestimmung bzw. Bestimmung der Ausrichtung des Informationswiedergabegeräts 1 zu ermitteln, kann weiterhin vorgesehen sein, zusätzliche Sensoren in dem Informationswiedergabegerät 1 vorzusehen. Ein solcher Sensor kann beispielsweise ein Kreisel sein.

Das erfindungsgemäße Informationswiedergabegerät ermöglicht auf einfache Weise die Zuordnung von Informationen zu Objekten von Orten innerhalb einer vorgegebenen räumlichen Umgebung zu einem durch das Informationswiedergabegerät aufgenommenen Bild. Insbesondere werden dabei dynamisch bei sich ändernder Ausrichtung des Informationswiedergabegeräts die tatsächlich für die Ausrichtung relevanten Informationen zu Objekten angezeigt.

Bei der vorgegebenen räumlichen Umgebung kann es sich um einen global oder regional begrenzten Bereich handeln. Ebenso kann es sich bei einer vorgegebenen räumlichen Umgebung um ein Betriebsgelände oder ein großes Gebäude oder ein Gebäudekomplex handeln.

Bezugszeichenliste

1    Informationswiedergabegerät

2    Anzeigeeinheit

3    Positionsbestimmungseinrichtung

4    Empfänger eines globalen Satellitennavigationssystems

5    Antenne

6    Antenne

7    Verarbeitungseinheit

8    Datenbank

9    Datenbank

10    Bilderfassungseinheit

s_A    zweites Signal

s_P    erstes Signal

L    erste Videodaten

R    zweite Videodaten

L'    zur Darstellung zu bringende Informationen

R'    zur Darstellung zu bringende Informationen

KV    drahtlose Kommunikationsverbindung

**Patentansprüche**

1. Informationswiedergabegerät (1), umfassend

   - eine Anzeigeeinheit (2) zur Darstellung von Informationen;
   - eine Verarbeitungseinheit (7), welche mit der Anzeigeeinheit (2) gekoppelt ist und dieser die darzustellenden Informationen bereitstellt;
   - eine Positionsbestimmungseinrichtung (3), welche dazu ausgebildet ist, die Position der Vorrichtung (1) sowie eine Ausrichtung der Vorrichtung zu bestimmen und der Verarbeitungseinheit (7) ein die Position repräsentierendes erstes Signal (s_P) und ein die Ausrichtung repräsentierendes zweites Signal (s_A) zur weiteren Verarbeitung zuzuführen;

   wobei die Verarbeitungseinheit (7) dazu ausgebildet ist,

   - Informationen zu Objekten aus einer Datenbank (8, 9) abzurufen und zu verarbeiten, wobei die Datenbank (8, 9) eine Vielzahl an Informationen zu Objekten von Orten innerhalb einer vorgegebenen räumlichen Umgebung umfasst, und
   - für die gegenwärtige Ausrichtung der Vorrichtung (1) Informationen zu Objekten in Richtung der Ausrichtung der Vorrichtung (1) zu ermitteln und auf der Anzeigeeinheit (2) zur Darstellung zu bringen.

2. Informationswiedergabegerät nach Anspruch 1, **dadurch gekennzeichnet, dass** die Positionsbestimmungseinrichtung (3) zumindest zwei Antennen (5, 6) eines globalen Satellitennavigationssystems umfasst, welche mit einem Empfänger des globalen Satellitennavigationssystems (GNSS-Empfänger) (4) zur Bestimmung der Position und Ausrichtung der Vorrichtung (1) gekoppelt sind.

3. Informationswiedergabegerät nach Anspruch 2, **dadurch gekennzeichnet, dass** die zumindest zwei Antennen (5, 6) in einem bekannten Abstand zueinander auf oder in dem Informationswiedergabegerät (1) angeordnet sind.

4. Informationswiedergabegerät nach einem der vorhergehenden Ansprüche, **dadurch gekennzeichnet, dass** die Positionsbestimmungseinrichtung (4) zur Positions- und Ausrichtungsbestimmung des Informationswiedergabegeräts zumindest einen weiteren Sensor umfasst.

5. Informationswiedergabegerät nach einem der vorhergehenden Ansprüche, **dadurch gekennzeichnet, dass** die Datenbank (8, 9) in einem lokalen Speicher (8) des Informationswiedergabegeräts angeordnet ist.

6. Informationswiedergabegerät nach einem der vorhergehenden Ansprüche, **dadurch gekennzeichnet, dass** die Datenbank (8, 9) in einem weiteren, über eine Kommunikationsverbindung zugreifbaren Speicher (9) angeordnet ist.

7. Informationswiedergabegerät nach einem der vorhergehenden Ansprüche, **dadurch gekennzeichnet, dass** dieses eine Bilderfassungseinheit (10) umfasst, welche der Verarbeitungseinheit (7) Videodaten (L, R) der Umgebung zur Verarbeitung und Darstellung auf der Anzeigeeinheit (2) oder einer weiteren Anzeigeeinheit bereitstellt.

8. Informationswiedergabegerät nach Anspruch 7, **dadurch gekennzeichnet, dass** die Bilderfassungseinheit (10) zwei Aufnahmeeinheiten für die Erzeugung eines Stereobilds umfasst.

9. Informationswiedergabegerät nach Anspruch 8, **dadurch gekennzeichnet, dass** die Informationen zu den Objekten den Videodaten auf der Anzeigeeinheit (2) überlagert sind.

10. Informationswiedergabegerät nach einem der vorhergehenden Ansprüche, **dadurch gekennzeichnet, dass** die Informationen zu den Objekten graphischer und/oder alphanumerischer Natur und optional in der Anzeigeeinheit (2) einblendbar und/oder ausblendbar sind.

11. Informationswiedergabegerät nach einem der vorhergehenden Ansprüche, **dadurch gekennzeichnet, dass** dieses tragbar oder in einem Fortbewegungsmittel angeordnet ist.

12. Informationswiedergabegerät nach einem der vorhergehenden Ansprüche, **dadurch gekennzeichnet, dass** dieses ein Fernglas oder eine Kamera oder ein PDA oder ein Telefon oder ein Rechner oder ein Assistenzsystem in einem Fahrzeug oder Flugzeug ist.

**13.** Verfahren zum Betrieb eines Informationswiedergabegeräts, das eine Anzeigeeinheit (2) zur Darstellung von Informationen, eine mit der Anzeigeeinheit (2) gekoppelte Verarbeitungseinheit (7) und eine Positionsbestimmungseinrichtung (3) umfasst, bei dem

- durch die Positionsbestimmungseinrichtung (3) die Position der Vorrichtung (1) sowie eine Ausrichtung der Vorrichtung bestimmt wird und der Verarbeitungseinheit (7) ein die Position repräsentierendes erstes Signal (s_P) und ein die Ausrichtung repräsentierendes zweites Signal (s_A) zur weiteren Verarbeitung zugeführt wird;
- durch die Verarbeitungseinheit (7) Informationen zu Objekten aus einer Datenbank (8, 9) abgerufen und verarbeitet werden, wobei die Datenbank (8, 9) eine Vielzahl an Informationen zu Objekten von Orten innerhalb einer vorgegebenen räumlichen Umgebung umfasst;
- durch die Verarbeitungseinheit (7) für die gegenwärtige Ausrichtung der Vorrichtung (1) Informationen zu Objekten in Richtung der Ausrichtung der Vorrichtung (1) ermittelt und an die Anzeigeeinheit (2) zur Darstellung übertragen werden.

**14.** Verfahren nach Anspruch 13, **dadurch gekennzeichnet, dass** die Bestimmung der Ausrichtung durch eine zeitgleiche Trägerphasenmessung von mindestens zwei relativ zu einem Satelliten angeordneten Antennen (5, 6) der Positionsbestimmungseinrichtung (4) erfolgt.

Fig. 1

Fig. 2

EP 2 365 283 A2

Fig. 3

Fig. 4